# EUROPÄISCHE PATENTSCHRIFT

(11) **EP 2 793 337 B1**
(45) Veröffentlichungstag und Bekanntmachung des Hinweises auf die Patenterteilung: **31.01.2018**
(21) Anmeldenummer: 14000826.9
(22) Anmeldetag: 08.03.2014
(51) Int. Cl.: H02G 3/12

(54) **Elektronisches Unterputzgerät der Gebäude-Installationstechnik**
Electronic flush mounted device for building installation technology
Appareil électronique encastré appartenant aux installations techniques domestiques

(30) Priorität: 19.04.2013 DE 102013006728
(43) Veröffentlichungstag der Anmeldung: 22.10.2014
(73) Patentinhaber: ABB AG, 68309 Mannheim (DE)
(72) Erfinder: Diehl, Sven, 57078 Siegen (DE); Mrkajic, Oliver, 58511 Lüdenscheid (DE); Gerrath, Volker, 58791 Werdohl-Eveking (DE); Czimmeck, Frank, 58511 Lüdenscheid (DE)

(56) Entgegenhaltungen:
- DE-A1- 2 165 277
- DE-A1-102006 040 686
- DE-A1-102008 035 722
- JP-A- 2010 081 717
- US-A- 5 309 979

## Beschreibung

Die Erfindung betrifft ein elektronisches Unterputzgerät der Gebäude-Installationstechnik.

Aus der DE 26 38 618 A ist ein insbesondere zum Einbau in genormte Dosen geeignetes elektronisches Helligkeitsgerät zur stufenlosen Einstellung der Helligkeit von Glüh- und Leuchtstofflampen bekannt, wobei ein Kühlblech des elektronischen Halbleiterelements mit der Außenwand eines Isolierstoff-Tragteils und letzteres mit einem von der Frontplatte abgebogenen Blechstreifen eine durch Berührung wärmeableitende Verbindung besitzt, d. h. die metallene Frontplatte dient außer als Tragring zum Einbau des Gerätes in eine genormte Unterputzdose noch zur Wärmeableitung für das elektronische Halbleiterelement.

Aus der DE 27 00 742 A ist eine Anordnung zur Wärmeableitung für elektronische Helligkeitssteuergeräte (Einbaugeräte) bekannt, bei welcher ein Thyristor und eine Manteldrossel gemeinsam von einem besonders zugeschnittenen und mit verschiedenen Abwinkelungen versehenen Kühlblech übergriffen werden. Eine dieser Abwinkelungen ist unmittelbar mit der Kühlfahne des Thyristors verbunden. Das Kühlblech gelangt im montierten Zustand mit seiner Oberseite unmittelbar an einer Tragplatte zur Anlage.

Aus der DE 20 36 496 C3 ist ein Einbaudimmer zur Helligkeitssteuerung von elektrischen Lampen bekannt, wobei die Verlustwärme eines Triacs über eine Aluminiumkappe an ein Kühlblech übertragen wird und wobei das Kühlblech von einem zur Außenatmosphäre hin weisenden Abdeckteil gehaltert wird.

Die DE 2 165 277 A zeigt ein elektronisches Unterputzgerät der Gebäudeinstallationstechnik mit einem Unterputzeinsatz, einem Tragring und einem Bedienelement als Hauptkomponenten, wobei im Inneren des Gehäuses des Unterputzeinsatzes eine Leiterplatten-Baugruppe mit mindestens einem wärmeentwickelnden Bauteil und ein Kühlblech zur Abfuhr der Verlustwärme vom Gehäuseinneren zum Äußeren des Gehäuses vorgesehen sind, welches in Form eines Rechteckes abgebogen ist und derart bis zu vier Hauptflächen parallel zu den Gehäusewänden bildet und welches an mindestens zwei Hauptflächen Wärme abgabeaußenflächen aufweist, die über Gehäuseöffnungen vom Gehäuseinneren an die Außenseite des Gehäuses geführt sind. Der Erfindung liegt die Aufgabe zugrunde, ein elektronisches Unterputzgerät der Gebäude-Installationstechnik mit optimierter Kühlung von wärmeentwickelnden Bauteilen anzugeben.

Diese Aufgabe wird erfindungsgemäß gelöst durch ein elektronisches Unterputzgerät der Gebäude-Installationstechnik mit einem Unterputzeinsatz, einem Tragring und einem Bedienelement als Hauptkomponenten, wobei im Inneren des Gehäuses des Unterputzeinsatzes eine Leiterplatten-Baugruppe mit mindestens einem wärmeentwickelnden Bauteil und ein Kühlblech zur Abfuhr der Verlustwärme vom Gehäuseinneren zum Äußeren des Gehäuses vorgesehen sind,
- welches in Form eines Rechteckes abgebogen ist und derart vier Hauptflächen parallel zu den Gehäusewänden bildet,
- welches an mindestens einer Hauptfläche mindestens eine Federklemmlasche für die wärmeleitende Kontaktierung mit mindestens einem wärmeentwickelnden Bauteil aufweist,
- welches an mindestens einer Hauptfläche Federlaschen für die wärmeleitende Kontaktierung mit dem Tragring aufweist,
- und welches an mindestens zwei Hauptflächen Wärmeabgabeaußenflächen aufweist, die über Gehäuseöffnungen vom Gehäuseinneren an die Außenseite des Gehäuses geführt sind.

Die mit der Erfindung erzielbaren Vorteile liegen insbesondere darin, dass eine ausreichende Abgabe von Verlustwärme trotz geringer, von der Unterputz-Gerätedose vorgegebener Gehäusegröße zuverlässig gewährleistet ist, so dass infolge einer Erhöhung der Wärmeabfuhr nach außen eine Leistungssteigerung des Unterputzgerätes ermöglicht wird. Das vorzugsweise aus einem gut wärmeleitenden Material bestehende Kühlblech verfügt über eine spezielle Federgeometrie, welche auf die elektronischen Komponenten wie z.B. Transistoren, drückt. Das Kühlblech ist so ausgelegt, dass es durch Öffnungen an die Außenseite des Gehäuses geführt wird. Dadurch kann die Wärme aus dem Gehäuse herausgeführt werden. Weiterhin sind federnde Laschen am Kühlblech angeformt, die an den Tragring des UP-Einsatzes drücken. Dadurch entsteht eine Wärmebrücke zum Tragring. Die Wärmeabfuhr kann somit aus dem UP-Einsatz heraus an den vor der Wand liegenden Tragring erfolgen. Dies ist insbesondere dann von Wichtigkeit wenn die UP-Dose in einer gut isolierten Wand verbaut ist und die Wärmeabfuhr in der UP-Dose deshalb nur in geringem Umfang möglich ist.

In vorteilhafter Weiterbildung weist das Gehäuse Führungsflächen für die Wärmeabgabeaußenflächen auf. Hierdurch wird die Einführung des Kühlblechs in das Gehäuse erleichtert.

Hinsichtlich der Ausführung des elektronischen Unterputzgeräts sind zwei Varianten realisierbar. Zum Einen können das Bedienelement und der Unterputzeinsatz in Form getrennter Bauteile ausgebildet sein und das Bedienteil kontaktiert den Unterputzeinsatz über eine elektrische Steckverbindung. Zum Anderen ist eine Ausführung in Form eines Monoblock-Gerätes realisierbar, bei welchem Bedienelement und Unterputzeinsatz eine Einheit bilden.

Die Erfindung wird nachstehend an Hand der in der Zeichnung dargestellten Ausführungsbeispiele näher erläutert. Es zeigen:
- Fig. 1: einen Schnitt durch ein Gehäuse eines Unterputzeinsatzes eines elektronischen Unterputzgeräts der Gebäude-Installationstechnik,
- Fig. 2: eine "Explosionsansicht" eines Unterputzeinsatzes eines elektronischen Unterputzgeräts der Gebäude-Installationstechnik,
- Fig. 3: einen Schnitt durch ein elektronisches Unterputzgerät der GebäudeInstallationstechnik,
- Fig. 4: eine perspektivische Sicht auf ein Gehäuse eines Unterputzeinsatzes vor der Montage eines Kühlblechs,
- Fig. 5: ein Detail des Gehäuses im Schnitt,
- Fig. 6: einen Unterputzeinsatz vor Montage des Bedienelements,
- Fig. 7: eine perspektivische Sicht auf ein Gehäuse,
- Fig. 8, 9: perspektivische Ansichten des Unterputzeinsatzes von der Bodenseite her betrachtet,
- Fig. 10: ein montiertes elektronisches Unterputzgerät in schematischer Darstellung.

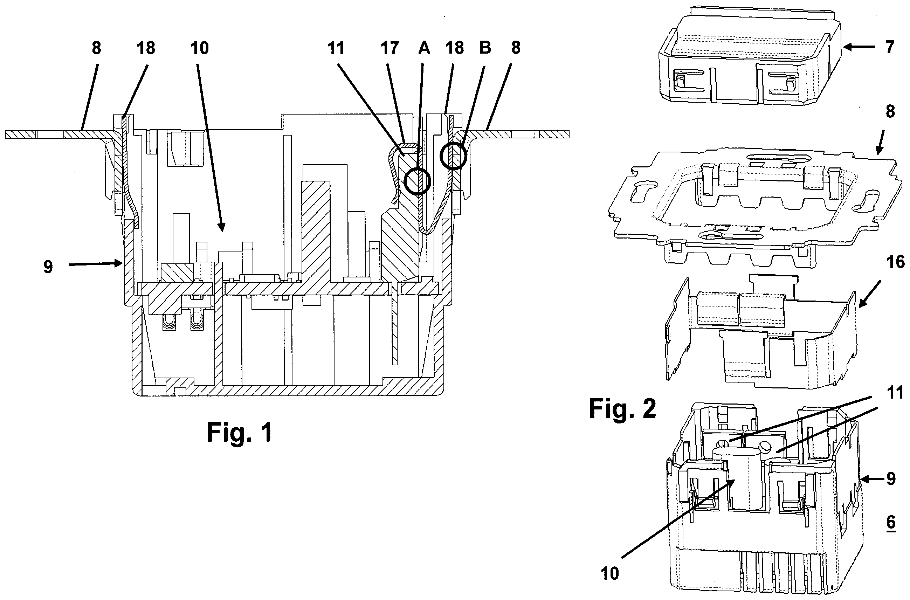

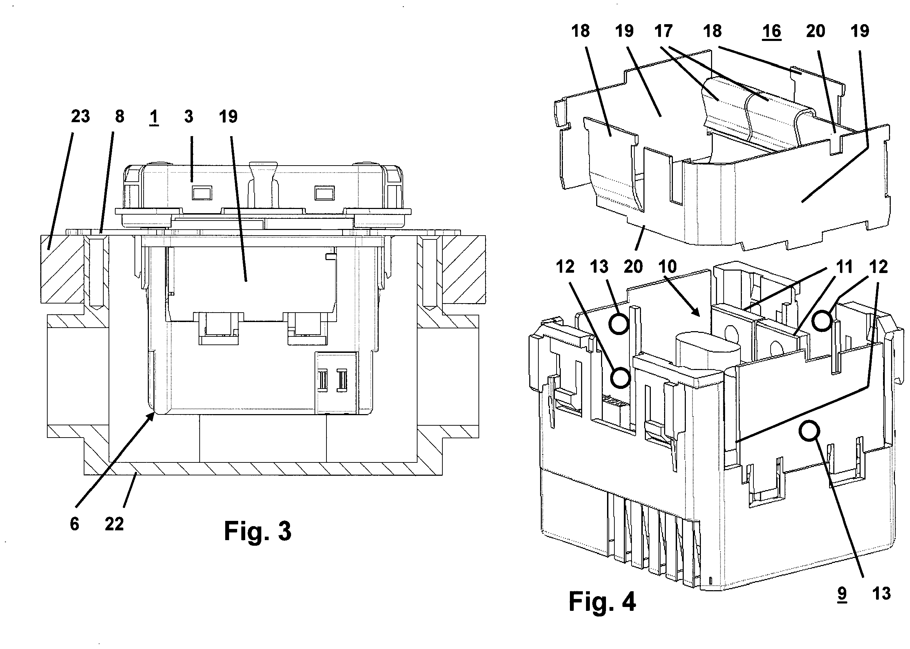

In Fig. 1 ist ein Schnitt durch ein Gehäuse eines Unterputzeinsatzes eines elektronischen Unterputzgeräts der Gebäude-Installationstechnik dargestellt. Im Gehäuse 9 ist eine Leiterplatten-Baugruppe 10 inklusive Leistungselektronik installiert, wobei es sich beim elektronischen Unterputzgerät beispielsweise um einen Dimmer handelt. Man erkennt ein wärmeentwickelndes Bauteil 11, beispielsweise einen LeistungsTransistor, dieser Leiterplatten-Baugruppe 10. Am Außenrand des Gehäuses 9 ist ein Tragring 8 montiert. Zur Abfuhr der während des Betriebes von den Baukomponenten der Leistungselektronik erzeugten Wärme ist ein aus einem gut wärmeableitenden Material bestehendes Kühlblech (siehe hierzu auch den oberen Bildabschnitt der Fig. 4) im Gehäuse 9 eingebaut,
- welches über mehrere Federlaschen 18 den Tragring 8 kontaktiert,
- welches über eine spezielle Federgeometrie mit Federklemmlaschen 17 das wärmeentwickelnde Bauteil 11 kontaktiert,
- welches durch Gehäuseöffnungen an die Außenseite des Gehäuses geführt wird,
um auf diese unterschiedliche Art und Weise Wärme aus dem Gehäuse herauszuführen.

In Fig. 2 ist eine "Explosionsansicht" eines Unterputzeinsatzes eines elektronischen Unterputzgeräts der Gebäude-Installationstechnik dargestellt. Der Unterputzeinsatz 6 setzt sich zusammen
- aus dem bereits in Fig. 1 erläuterten Gehäuse 9 inklusive der montierten Leiterplatten-Baugruppe 10 mit den wärmeentwickelnden Bauteilen 11,
- aus einem die Frontseite des Gehäuses 9 abdeckenden Deckel 7,
- aus dem am oberen Rand des Gehäuses 9 befestigten Tragring 8.

Das in das Gehäuse 11 einzubringende Kühlblech 16 ist separat gezeigt.

In Fig. 3 ist ein Schnitt durch ein elektronisches Unterputzgerät der Gebäude-Installationstechnik dargestellt. Es ist eine in einer Wand 23 installierte Unterputz-Gerätedose 22 zu erkennen, in welche das elektronische Unterputzgerät 1 der Gebäude-Installationstechnik eingebaut ist. Als Komponenten des elektronischen Unterputzgeräts 1 sind zu erkennen:
- der Unterputzeinsatz 6,
- der Tragring 8,
- ein auf den Unterputzeinsatz 6 aufgestecktes Bedienelement 3.

Dabei werden Außenmantelflächen des Unterputzeinsatzes 6 teilweise von Wärmeabgabeaußenflächen 19 des Kühlblechs 16 bedeckt.

In Fig. 4 ist eine perspektivische Sicht auf ein Gehäuse eines Unterputzeinsatzes vor der Montage eines Kühlblechs dargestellt. Das im oberen Bildabschnitt gezeigte Kühlblech 16 ist in Form eines Rechteckes abgebogen und bildet derart vier Hauptflächen,
- wobei an zwei sich gegenüberliegenden Hauptflächen je eine Federlasche 18 für die Kontaktierung mit dem Tragring 8 vorgesehen ist,
- wobei an den beiden anderen sich gegenüberliegenden Hauptflächen je eine Wärmeabgabeaußenfläche 19 vorgesehen ist,
- wobei an mindestens einer der Hauptflächen mindestens eine (im gezeigten Ausführungsbeispiel zwei) Federklemmlasche 17 für den Kontakt mit einem wärmeentwickelnden Bauteil 11 vorgesehen ist,
- wobei die Hauptflächen zumindest teilweise über Verbindungsflächen 20 miteinander verbunden sind, wobei diese Verbindungsflächen 20 selbstverständlich ebenfalls am Wärmetransport der Verlustwärme beteiligt sind.

Im unteren Bildabschnitt der Fig. 4 ist gezeigt, dass das Gehäuse 9
- mit Gehäuseöffnungen 12 versehen ist, durch welche das Kühlblech 16 abschnittsweise geführt und gehalten wird und welche eine federnde Kontaktierung mit dem Tragring 8 unterstützen,
- mit Führungsflächen 13 versehen ist, welche zur Führung und Abstützung der Wärmeabgabeaußenflächen 19 dienen.

Des Weiteren zeigt Fig. 4 die Leiterplatten-Baugruppe 10 mit den wärmeentwickelnden Bauteilen 11, auf welche die Federklemmlaschen 17 des Kühlblechs aufzuschieben sind.

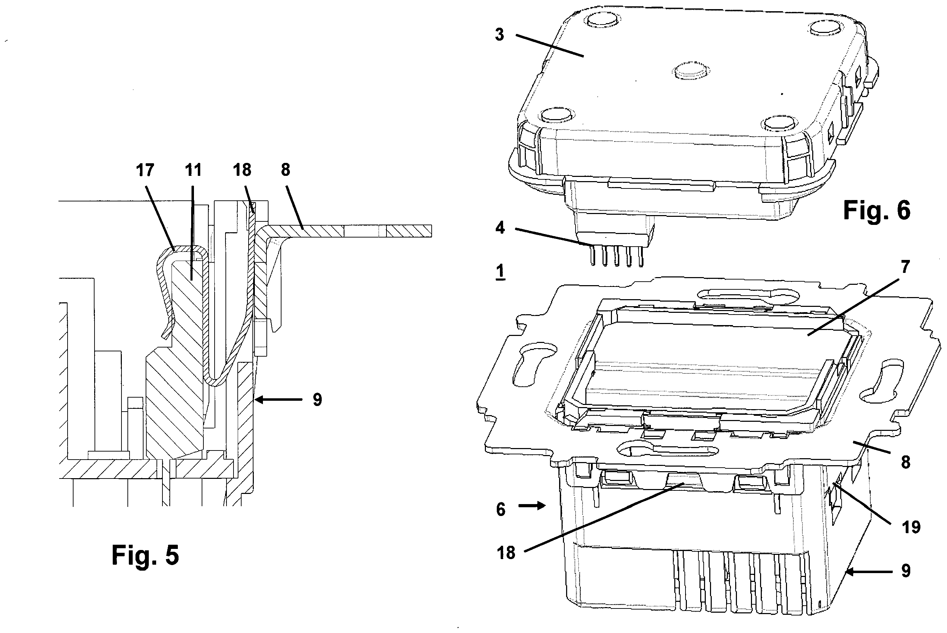

In Fig. 5 ist ein Detail des Gehäuses im Schnitt dargestellt. Das Detail zeigt, wie die Federklemmlasche 17 derart über das wärmeentwickelnde Bauteil 11 greift, dass ein guter Wärmeübergang vom Bauteil 11 zum Kühlblech 16 erzielt wird - siehe Wärmeübergangsfläche A. Das Detail zeigt des Weiteren, wie die Federlasche 18 derart gegen den am Gehäuse 9 montierten Tragring 8 presst, dass ein guter Wärmeübergang vom Kühlblech 16 zum Tragring 8 erzielt wird - siehe Wärmeübergangsfläche B. Ganz allgemein dient eine entsprechend gestaltete Federgeometrie am Kühlblech 16 zur Klemmung auf Bauteilen mit hoher Wärmeentwicklung. Ferner ist eine Anlage des Kühlblechs 16 am Tragring 8 mit Vorspannung vorgesehen.

In Fig. 6 ist ein Unterputzeinsatz vor Montage des Bedienelements dargestellt. Es ist das Bedienelement 3 mit seiner elektrischen Steckverbindung 4 zu erkennen, welche in eine korrespondierende Steckvorrichtung im Deckel 7 des Unterputzeinsatzes 6 einzuführen ist. Ferner sind eine abschnittsweise in Kontakt mit dem Tragring 8 stehende Federlasche 18 des Kühlblechs 16 und eine am Gehäuse 9 gebildete Wärmeabgabeaußenfläche 19 zu erkennen.

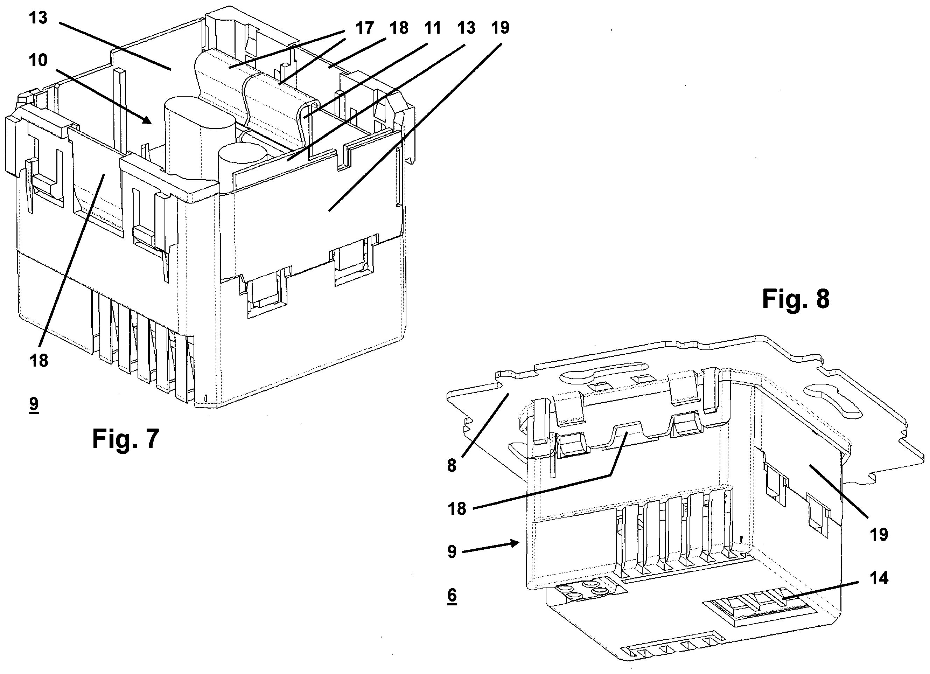

In Fig. 7 ist eine perspektivische Sicht auf ein Gehäuse dargestellt. Es ist das im Gehäuse 9 montierte Kühlblech 16 mit den auf wärmeentwickelnde Bauteile 11 der Leiterplatten-Baugruppe 10 aufgeschobenen Federklemmlaschen 17, mit den Federlaschen 18 zum Tragring und mit außerhalb von Führungsflächen 13 angeordneter Wärmeabgabeaußenflächen 19 zu erkennen.

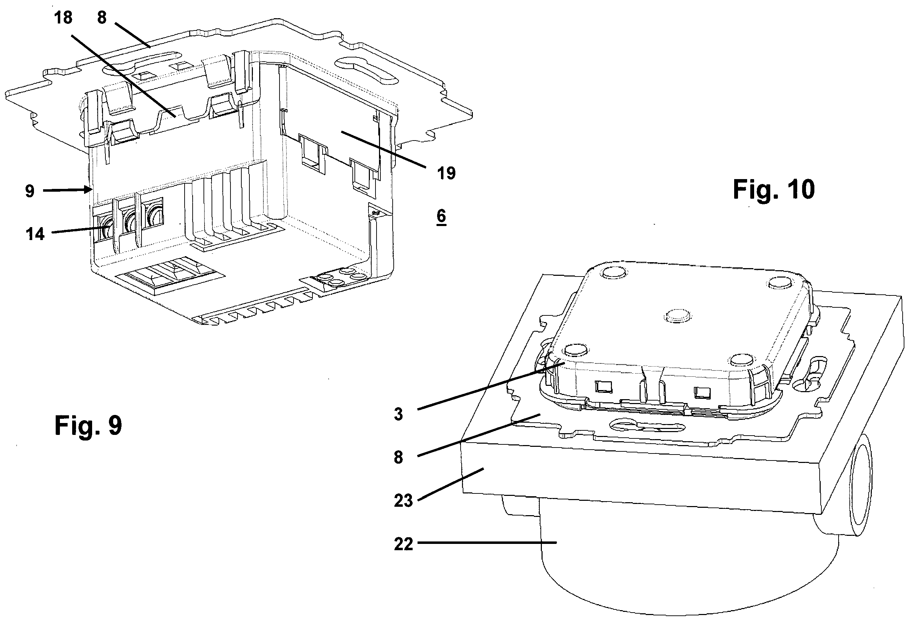

In den Fig. 8 und 9 sind perspektivische Ansichten des Unterputzeinsatzes dargestellt und zwar von der Bodenseite her betrachtet. In der Bodenplatte des Gehäuses 9 des Unterputzeinsatzes 6 ist ein Leiter-Anschlussblock 14 angeordnet. Die zwischen Tragring 8 und Gehäuse 9 befindlichen Federlaschen 18 und die nach außen hin Wärme abgebenden Wärmeabgabeaußenflächen 19 des Kühlblechs sind gut erkennbar.

In Fig. 10 ist ein montiertes elektronisches Unterputzgerät in schematischer Darstellung dargestellt. Es sind das Bedienelement 3 und der Tragring 8 des elektronischen Unterputzgerätes 1 zu erkennen, während sich der Unterputzeinsatz in der in einer Wand 23 installierten Unterputz-Gerätedose 22 befindet und damit nicht erkennbar ist. Auf der Frontseite des Bedienelements 3 sind mehrere Tastflächen von Mikroschaltern zu erkennen. Diese Mikroschalter können beispielsweise durch entsprechende Betätigung einer auf das Bedienelement 3 aufgesteckten schwimmenden Wippe separat angesteuert werden. Selbstverständlich wird das gezeigte Unterputzgerät durch einen Abdeckrahmen komplettiert.

Auch wenn beim vorstehend erläuterten Ausführungsbeispiels ein Unterputzgerät beschrieben wird, bei welchem das Bedienelement 3 und der Unterputzeinsatz 6 in Form getrennter Bauteile ausgebildet sind, ist die Erfindung auch bei sogenannten Monoblock-Geräten einsetzbar, bei welchen Bedienelement und Unterputzeinsatz eine Einheit bilden.

### Bezugszeichenliste

- 1: Elektronisches Unterputzgerät der Gebäude-Installationstechnik (Dimmer)
- 3: Bedienelement
- 4: Elektrische Steckverbindung zum Unterputzeinsatz
- 6: Unterputzeinsatz mit Elektronik
- 7: Deckel des Unterputzeinsatzes
- 8: Tragring
- 9: Gehäuse des Unterputzeinsatzes
- 10: Leiterplatten-Baugruppe inklusive Leistungselektronik
- 11: Wärmentwickelndes Bauteil (z. B. Transistor)
- 12: Gehäuseöffnungen im Gehäuse
- 13: Führungsflächen für Wärmeabgabeaußenflächen im Gehäuse
- 14: Leiter-Anschlussblock
- 16: Kühlblech
- 17: Federklemmlaschen zum wärmentwickelnden Bauteil
- 18: Federlaschen zum Tragring
- 19: Wärmeabgabeaußenflächen
- 20: Verbindungsflächen
- 22: Unterputz-Gerätedose
- 23: Wand

## Patentansprüche

1. Elektronisches Unterputzgerät (1) der Gebäude-Installationstechnik mit einem Unterputzeinsatz (6), einem Tragring (8) und einem Bedienelement (3) als Hauptkomponenten, wobei im Inneren des Gehäuses (9) des Unterputzeinsatzes (6) eine Leiterplatten-Baugruppe (10) mit mindestens einem wärmeentwickelnden Bauteil (11) und ein Kühlblech (16) zur Abfuhr der Verlustwärme vom Gehäuseinneren zum Äußeren des Gehäuses (9) vorgesehen sind,
• welches in Form eines Rechteckes abgebogen ist und derart vier Hauptflächen parallel zu den Gehäusewänden bildet,
• welches an mindestens einer Hauptfläche mindestens eine Federklemmlasche (17) für die wärmeleitende Kontaktierung mit mindestens einem wärmeentwickelnden Bauteil (11) aufweist,
• und welches an mindestens einer Hauptfläche Federlaschen (18) für die wärmeleitende Kontaktierung mit dem Tragring (8) aufweist, und welches an mindestens zwei Hauptflächen Wärmeabgabeaußenflächen (19) aufweist, die über Gehäuseöffnungen (12) vom Gehäuseinneren an die Außenseite des Gehäuses geführt sind.

2. Elektronisches Unterputzgerät (1) nach Anspruch 1, **dadurch gekennzeichnet, dass** das Gehäuse (9) Führungsflächen (13) für die Wärmeabgabeaußenflächen (19) aufweist.

3. Elektronisches Unterputzgerät (1) nach Anspruch 1 oder 2, **dadurch gekennzeichnet, dass** das Bedienelement (3) und der Unterputzeinsatz (6) in Form getrennter Bauteile ausgebildet sind und das Bedienteil (3) den Unterputzeinsatz (6) über eine elektrische Steckverbindung (4) kontaktiert.

4. Elektronisches Unterputzgerät (1) nach Anspruch 1 oder 2, **gekennzeichnet durch** eine Ausführung in Form eines Monoblock-Gerätes, bei welchem Bedienelement und Unterputzeinsatz eine Einheit bilden.

## Claims

1. Electronic flush-mounted device (1) for building installation technology, having a flush-mounted insert (6), a carrying ring (8) and an operator control element (3) as main components, wherein a printed circuit board assembly (10), having at least one heat-developing component (11), and a metal cooling plate (16) for dissipating the lost heat from the housing interior to the exterior of the housing (9) are provided in the interior of the housing (9) of the flush-mounted insert (6),
• which metal cooling plate is bent in the form of a rectangle and in this way forms four main faces parallel to the housing walls,
• which metal cooling plate has, on at least one main face, at least one spring clamping tab (17) for making thermally conductive contact with at least one heat-developing component (11),
• and which metal cooling plate has, on at least one main face, spring tabs (18) for making thermally conductive contact with the carrying ring (8), and which metal cooling plate has, on at least two main faces, heat discharge outer faces (19) which are routed from the housing interior to the outside of the housing via housing openings (12).

2. Electronic flush-mounted device (1) according to Claim 1, **characterized in that** the housing (9) has guide faces (13) for the heat discharge outer faces (19).

3. Electronic flush-mounted device (1) according to Claim 1 or 2, **characterized in that** the operator control element (3) and the flush-mounted insert (6) are designed in the form of separate components, and the operator control part (3) makes contact with the flush-mounted insert (6) by means of an electrical plug-type connection (4).

4. Electronic flush-mounted device (1) according to Claim 1 or 2, **characterized by** a design in the form of a monoblock device in which the operator control element and the flush-mounted insert form a unit.

## Revendications

1. Appareil électronique encastré (1) pour installations techniques domestiques comportant comme composants principaux un insert encastré (6), une bague de support (8) et un élément de commande (3), dans lequel il est prévu, à l'intérieur du boîtier (9) de l'insert encastré (6), un ensemble (10) de cartes de circuits imprimés comportant au moins un élément générateur de chaleur (11) et une plaque de refroidissement (16) destinée à dissiper la perte de chaleur de l'intérieur du boîtier vers l'extérieur du boîtier (9),
• qui est recourbée en forme de rectangle et forme ainsi quatre surfaces principales parallèles aux parois du boîtier,
• qui comporte, sur au moins une surface principale, au moins une patte de serrage à ressort (17) destinée à être en contact conducteur de chaleur avec au moins un composant générateur de chaleur (11),
• et qui comporte des pattes de ressort (18) sur au moins une surface principale pour le contact conducteur de chaleur avec la bague de support (8), et qui comporte, sur au moins deux surfaces principales, des surfaces extérieures génératrices de chaleur (19) guidées de l'intérieur du boîtier vers l'extérieur du boîtier par des ouvertures de boîtier (12).

2. Appareil électronique encastré (1) selon la revendication 1, **caractérisé en ce que** le boîtier (9) comporte des surfaces de guidage (13) pour les surfaces extérieures génératrices de chaleur (19).

3. Appareil électronique encastré (1) selon la revendication 1 ou 2, **caractérisé en ce que** l'élément de commande (3) et l'insert encastré (6) sont réalisés sous la forme de composants séparés et **en ce que** l'unité de commande (3) est en contact avec l'insert encastré (6) par l'intermédiaire d'une fiche de raccordement électrique (4).

4. Appareil électronique encastré (1) selon la revendication 1 ou 2, **caractérisé en ce qu'**il est réalisé sous la forme d'un appareil monobloc, dans lequel l'élément de commande et l'insert encastré forment une unité.
